# EUROPÄISCHE PATENTSCHRIFT

(11) **EP 0 832 805 B1**
(45) Veröffentlichungstag und Bekanntmachung des Hinweises auf die Patenterteilung: **03.04.2002**
(21) Anmeldenummer: 97114189.0
(22) Anmeldetag: 18.08.1997
(51) Int. Cl.: B61K 3/02, F16N 7/12

(54) **Bürstenvorrichtung zum Schmieren und Reinigen von Führungs- und/oder Antriebselementen**
Brush apparatus for lubricating and cleaning of guiding and/or driving elements
Dispositif à brosse pour la lubrification et le nettoyage des éléments de guidage et/ou d'entraînement

(30) Priorität: 03.09.1996 DE 19635728
(43) Veröffentlichungstag der Anmeldung: 01.04.1998
(73) Patentinhaber: WYSSMANN, Max, CH-3360 Herzogenbuchsee (CH)
(72) Erfinder: WYSSMANN, Max, CH-3360 Herzogenbuchsee (CH)
(74) Vertreter: Specht, Peter, Dipl.-Phys.

(56) Entgegenhaltungen:
- EP-A- 0 599 087
- US-A- 5 386 882
- PATENT ABSTRACTS OF JAPAN vol. 096, no. 012, 26. Dezember 1996 (1996-12-26) & JP 08 217363 A (HITACHI BUILDING SYST ENG &SERVICE CO LTD), 27. August 1996 (1996-08-27)
- PATENT ABSTRACTS OF JAPAN vol. 097, no. 004, 30. April 1997 (1997-04-30) & JP 08 334198 A (HEWTEC ORIJIN:KK), 17. Dezember 1996 (1996-12-17)

## Beschreibung

Die Erfindung betrifft eine Bürstenvorrichtung zum Schmieren und Reinigen von Führungs- und/oder Antriebselementen, insbesondere zum Schmieren und Reinigen von Ketten, Schienen oder Seilen, nach dem Oberbegriff des Anspruches 1.

Eine gattungsgemäße Bürstenvorrichtung ist aus der US 5 386 882 bekannt. Diese Bürstenvorrichtung weist einen U-förmigen Rahmen auf, der Seile oder Schienen des Aufzuges einfaßt und Bürstenelemente zum Reinigen der Seile oder Schienen. Das Auftragen des Schmierstoffes erfolgt über einen filzartigen Streifen, der in ein Schmierstoffreservoir eingetaucht ist. Das dem Schmierstoffreservoir abgewandt Ende des filzartigen Streifens liegt an dem zu schmierenden Element an. Dadurch wird der filzartige Streifen bei der Schmierung stark beansprucht und relativ schnell abgenutzt. Problematisch ist auch, daß ein Überschmieren der Seile oder Schienen erfolgen kann.

Vorrichtungen zum automatischen Schmieren von Ketten sind bereits seit vielen Jahren bekannt. Ein automatischer Schmierstoffgeber (der z.B. auf der Basis einer elektrochemischen Reaktion arbeitet) führt über eine Einrichtung zur Auslaufsicherung einer Bürste fortwährend Schmierstoff zu, den diese an die zu schmierende Kette weitergibt.

In der EP 0 599 087 wird eine Zuleitungseinrichtung zwischen die Bürsten und den Schmierstoffgeber geschaltet, die Bohrungen zur Zuleitung des Schmiermittels (z.B. Öl) aufweist. Problematisch ist, daß Öl sich den Weg des geringsten Widerstandes sucht. Das Öl bewegt sich in der Zuleitungseinrichtung daher bevorzugt direkt nach unten, so daß nicht sichergestellt ist, daß den verschiedenen Seitenbereichen und abgelegeneren Stellen eines zu schmierenden Maschinenelementes gleichmäßig die jeweils gewünschte Schmiermittelmenge zugeführt wird. Ferner besteht bei der in der EP 0 599 087 beschriebenen Zuleitungseinrichtung das Problem, daß die Zuleitungseinrichtung im wesentlichen jeweils nur für eine Art von Schmierstoff geeignet ist. Da sich bei einem dünnflüssigeren Schmierstoff zudem nicht Bohrungen des gleichen Durchmessers wie bei einem dickflüssigeren Schmierstoff verwenden lassen , ist es nach der Lösung der EP 0 599 087 nötig, die Zuleitungseinrichtung in konstruktiv aufwendiger Weise an die jeweilige Schmierstoffart anzupassen.

Die Erfindung zielt ausgehend von dem gattungsgemäßen Stand der Technik darauf ab, eine baulich einfache Bürstenvorrichtung zum Schmieren und Reinigen von Führungs- und/oder Antriebselementen zu schaffen, die bei konstruktiv einfacher Bauart dauerhaft eine zuverlässige und gleichmässige Schmierstoffversorgung und Reinigung auch unter rauheren Bedingungen gewährleistet.

Die Erfindung erreicht dieses Ziel durch den Gegenstand des Anspruches 1. Die Bürstenvorrichtung ist mit dem Bürstenelement versehen, welches eine oder mehrere Bürstenreihen aufweist, die an die Zuleitungsbahn aus dem einem filz- oder vliesartigen Material angrenzen bzw. zumindest bei Relativbewegungen zwischen Bürste und Maschinenelement an der Zuleitungsbahn anliegen, von dieser Schmierstoff aufnehmen und auf das Maschinenelement streichen. Gleichzeitig erfolgt durch die Bürstenreihen eine Reinigung des Maschinenelementes von Verunreinigungen.

Die Erfindung nutzt den von einem Docht oder Filz (im Sinne der Erfindung sind unter Filzfäden auch Vliese verschiedener Art zu verstehen) bekannten Effekt des Aufsaugens und Zuleitens einer Flüssigkeit (hier Öl) für eine gleichmässige und flächige Zuführung von Schmierstoff zu den gesamten Borsten einer Bürste oder gar eines Bürstensystemes. Ein einzelner, in einen Ölbehälter eingetauchter, Filzfaden zur Zuleitung von Öl hat den Nachteil, daß Schmierstoff fortlaufend unkontrolliert aus dem Ölbehälter angesaugt und an das zu schmierende Maschinenelement abgegeben wird. Das Maschinenelement wird damit "überölt", was z. B. bei Führungsschienen von Fahrstühlen dazu führen kann, daß das Öl die Führungsschienen hinabläuft und den Boden des Fahrstuhlschachtes verunreinigt.

Diesem Effekt schafft die Erfindung durch die gewählte Kombination aus filzartigem (bzw. vliesartigem) Element und angrenzender Bürstenreihe im Zusammenspiel mit einem anschließbaren Schmierstoffgeber Abhilfe, denn dem Filz wird stets nur eine definierte Menge an Schmierstoff zugeführt. Die Verwendung einer im Vergleich zu einem Faden großflächigen Zuleitungsbahn hat darüberhinaus den Vorteil, daß der Schmierstoff jeder Stelle des zu schmierenden Elementes gleichmäßig in definierter Weise zugeführt wird. Neben der Schmierfunktion wird durch die erfindungsgemäße Vorrichtung in besonders vorteilhafter Weise eine ständige Reinigung des Maschinenelementes erreicht.

Vorteilhafte Varianten der Erfindung sind den weiteren Unteransprüchen zu entnehmen.

Nachfolgend wird die Erfindung anhand von Ausführungsbeispielen unter Bezug auf die Zeichnung näher beschrieben. Es zeigt:
- Fig. 1: eine teilgeschnittene Seitenansicht eines ersten Ausführungsbeispieles der Erfindung;
- Fig. 2: eine Draufsicht auf das Ausführungsbeispiel der Fig. 1;
- Fig. 3: eine gegenüber Fig. 2 um 90° gedrehte Schnittansicht durch die oberen Borstenreihen des Ausführungsbeispieles aus Fig. 1;
- Fig. 4: eine schematische Ansicht eines weiteren Ausführungsbeispieles der Erfindung;
- Fig. 5: ein weiteres Ausführungsbeispiel der Erfindung - ähnlich zu Fig. 4 - mit einem daran angeschlossenen Zuleitungs-Kapillarsystem.

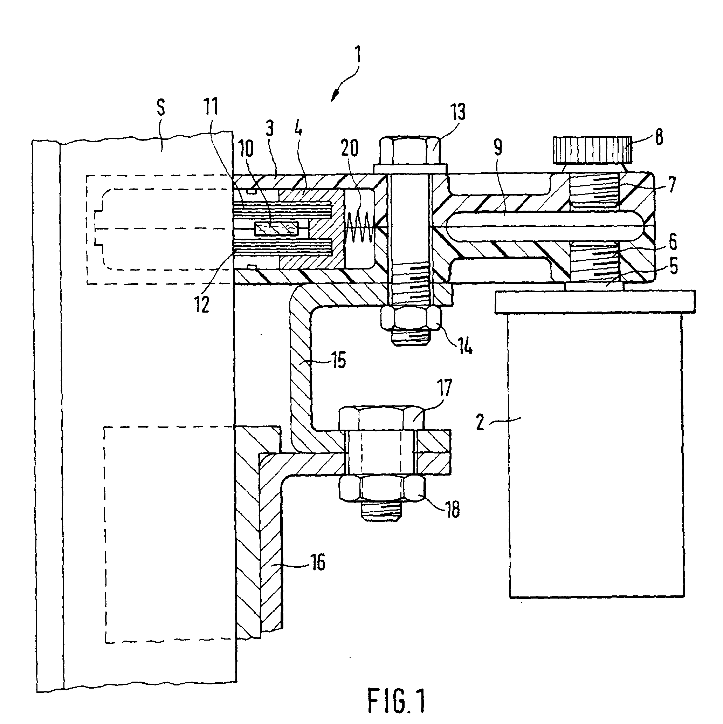

Zunächst sei das Ausführungsbeispiel der Fig. 1 beschrieben. Fig. 1 zeigt eine erfindungsgemäße Bürstenvorrichtung 1 zum automatischen Schmieren und Reinigen, insbesondere von Führungs- und Antriebselementen, hier eine Führungsschiene S für Aufzüge. Die Bürstenvorrichtung 1 weist einen automatischen Schmierstoffgeber 2 auf, der über eine Zuleitungseinrichtung 3 Schmierstoff (hier z. B. Öl) einem Bürstenelement 4 zuführt. Der Schmierstoffgeber 2 ist beispielsweise mit einem automatischen, elektrochemischen Gasdruckantrieb (nicht dargestellt) versehen, welcher einstellbar über einen definierten Zeitram hinweg den im Schmierstoffgeber 2 enthaltenen Schmierstoffvorrat abgibt. Der Schmierstoffgeber 2 weist einen Auslaßstutzen 5 auf, der in ein Gewinde 6 einer Bohrung 7 des Gehäuses der - z.B. aus Kunststoff gefertigten - Zuleitungseinrichtung 3 eingeschraubt ist.

Ein Schraubverschluß 8 für das dem Schmierstoffgeber gegenüberliegende freie Ende der Bohrung 7 ermöglicht eine optische Kontrolle des Schmierstoffsystems. Ferner ist durch den Schraubverschluß 8 (oder einen Stopfen) die Möglichkeit des Anschlusses eines zweiten Schmierstoffgebers gegeben und es ist möglich, beim erstmaligen Einsatz Öl in die Zuleitungseinrichtung zu geben und die Zuleitungsbahnen der Zuleitungseinrichtung mit Öl vorzutränken.

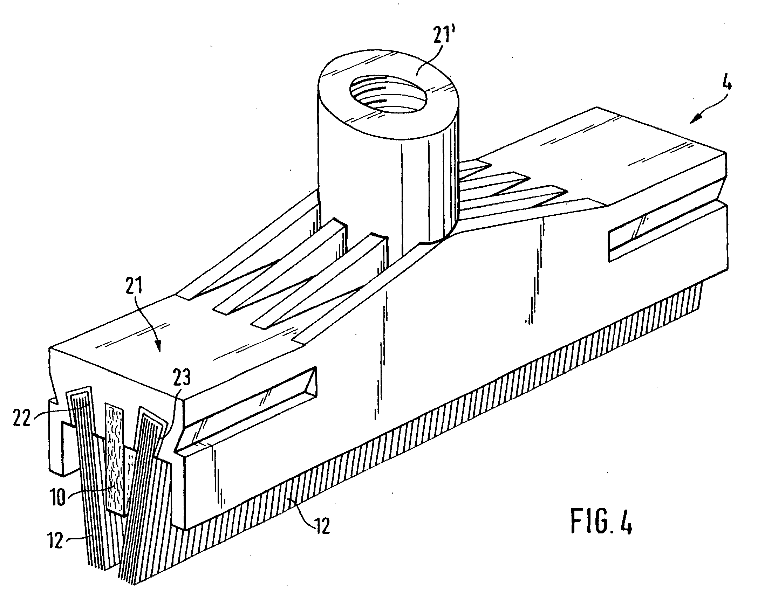

Die Zuleitungseinrichtung 3 (mit einem Gehäuse aus Kunststoff oder Metall) weist einen Hohlraum 9 nach Art eines zentralen Systemes einer flächigen Öffnung auf, in die eine oder mehrere Vlies- oder Filzbahnen 10 zur Schmierstoffzuleitung eingelegt sind. Gibt der Schmierstoffgeber infolge von Gasentwicklung Schmierstoff ab, wird dieser vom Filz oder Vlies aufgezogen. Bei fortwährender definierter Schmierstoffabgabe wird die Filz-Zuleitungsbahn 10 bis zu den Bürstenelementen 4 vom Schmierstoff durchtränkt, so daß die Bürstenelemente 4 das Maschinenelement bei Bewegungen relativ zu diesem mit Schmierstoff bestreichen können. Während der Relativbewegung zwischen Bürstenelement 4 und Maschinenelement streifen die Bürsten das Öl vom Filz ab. Da das Bürstenelement 4 bevorzugt (siehe Fig. 4) zwei schräg gestellte, zum Filz hin geneigte Bürstenreihen 11, 12 aufweist, ist auch bei einem Wechsel der Bewegungsbzw. Laufrichtung stets die optimale Schmierstoffzuleitung zum Maschinenelement gewährleistet.

Wie ferner in Fig. 1 zu erkennen, erstreckt sich die Filz-Zuleitungsbahn 10 aus dem Hohlraum 9 heraus bis zwischen die einzelnen Bürstenreihen 11, 12. Uber ein Befestigungsmittel, hier ein Bolzen 13 mit Sicherungsmutter 14, sowie über zwei miteinander verschraubte Profile 15, 16 (sowie Schraube 17 mit Bolzen 18), ist die Schmiervorrichtung 1 an einer Aufzugskabine bzw. an einem Förderkorb (jeweils nicht dargestellt) befestigbar, so daß sie die Schiene S bei Relativbewegungen zur Aufzugskabine zuverlässig und gleichmäßig schmiert. Das Bürstenelement 4 ist in eine U-förmige Öffnung 19 der Zuleitungseinrichtung 3 eingesetzt, wobei die Länge der Seiten des U den Abmessungen des Bürstenelementes 4 entspricht und wobei die Enden der Bürstenreihen 11, 12 durch ein Federelement 20 an die Schiene gedrückt werden.

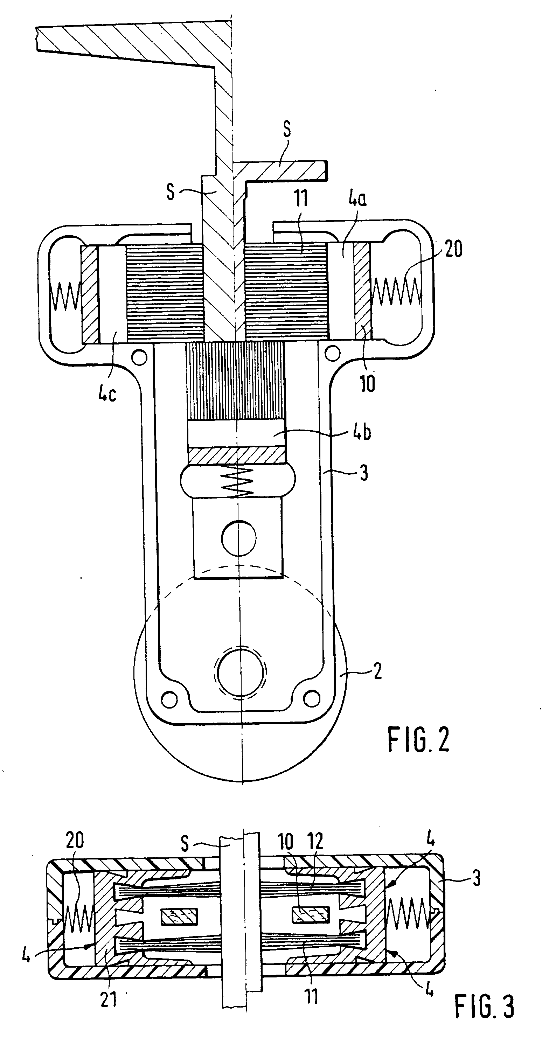

Wie in Fig. 2 und Fig. 3 dargestellt, ist die Zuleitungseinrichtung derart ausgebildet, daß sie die Schiene S mehrseitig umfaßt, wobei drei von vier Schienenseiten jeweils eines der Bürstenelemente 4a, 4b, 4c zugeordnet ist und wobei sich die Filz-Zuleitungsbahn 10 jeweils in Einzel-Zuleitungsbahnen zur Zuleitung von Schmierstoff zu jedem der Bürstenelemente 4a, 4b, 4c aufteilt. Auf diese Weise wird auf einfachste Art ein mehrseitiges Schmieren der zu ölenden Schiene S sichergestellt, denn die Filz-Zuleitungsbahn 10 führt jeder Stelle der Bürstenelemente 4a-4c gleichmäßig Schmierstoff zu. Die Federn 20 sorgen dafür, daß die Bürstenelemente 4 definiert gegen die Schiene S gedrückt werden. Ferner ist die Federn 20 gewährleistet, daß die Bürstenvorrichtung 1 für Schienen S verschiedenster Stärke einsetzbar ist, denn die Federn sorgen stets für ein definiertes Andrücken der Bürstenelemente 4 an die Schiene S (siehe auch Fig. 2 mit zwei Beispielschienen S. Bei Förderbewegungen werden die Laufschienen des Fahrstuhles in genau definierter Weise auf zuverlässige Art umfaßt, gereinigt und geschmiert.

Fig. 4 veranschaulicht, daß die Halterung 21 des Bürstenelementes 4 ebenfalls im wesentlichen U-förmig ausgebildet ist (U-Profil), wobei die Bürstenreihe in zwei in der Halterung ausgesparten Nuten 22, 23 eingeschoben sind. Die Bürstenreihen liegen leicht geneigt zueinander in den Nuten 22, 23, so daß eine schlüssige Verbindung mit dem Zuleitungsfilz gewährleistet ist, und auch beim Wechsel der Bewegungsrichtung stets ein zuverlässiges Schmieren erfolgt.

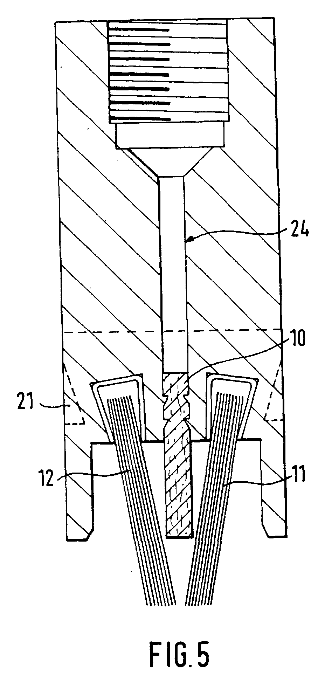

Neben der in Fig. 4 und Fig. 5 gezeigten Querschnittsgeometrie der Zuleitung der Schmierstoffbürsten ist es selbstverständlich auch möglich, z. B. runde Schmierstoffbürsten zu fertigen (nicht dargestellt). Hierbei liegt in der Mitte ein zentraler Stopfen aus filz- bzw. vliesartigem Material, der ringsherum von einer Borstenreihe umgeben ist.

Es ist ferner vorteilhaft, daß die Zuleitungseinrichtung 3' bzw. die Halterung 21 nach Art der Fig. 4 oder 5 einen integrierten (oder als separates Bauteil ausgebildeten) (Rohr-)Ansatz 21' mit einer inneren Zuleitung 24 mit Kapillarwirkung aufweist, durch welche der Schmierstoff zur Zuleitungsbahn 10 geführt wird. Die Kapillarwirkung hat den Vorteil, daß der Schmierstoffgeber 2 nicht unkontrolliert auslaufen kann sondern nur in der durch den Gasantrieb des Schmierstoffgebers vorgegebenen Menge aus dem Schmierstoffgeber 2 austritt. Als Verschlußelement für den Schmierstoffgeber 2 hat sich ein aufschneidbarer Stopfen bewährt, wie er in anderer Dimension z. B. von Spülmittelflaschen bekannt ist.

### Bezugszeichenliste:

- Bürstenvorrichtung: 1
- Schmierstoffgeber: 2
- Zuleitungseinrichtung: 3
- Bürstenelement: 4
- Auslaßstutzen: 5
- Gewinde: 6
- Bohrung: 7
- Schraubverschluß: 8
- Hohlraum: 9
- Zuleitungsbahn: 10
- Bürstenreihen: 11, 12
- Bolzen: 13
- Sicherungsmutter: 14
- Winkel: 15, 16
- Schraube: 17
- Mutter: 18
- Öffnung: 19
- Feder: 20
- Halterung: 21
- Rohransatz: 21'
- Nuten: 22, 23
- Zuleitung: 24
- Schiene: S

## Patentansprüche

1. Bürstenvorrichtung zum Schmieren und Reinigen von Führungs- und/oder Antriebselementen, insbesondere zum Schmieren und Reinigen von Ketten, Schienen oder Seilen, mit einem Bürstenelement (4) und einer Zuleitungsbahn (10) für den Schmierstoff aus einem filz- oder vliesartigen Material, **dadurch gekennzeichnet, daß** das Bürstenelement zum Auftragen des Schmierstoffes auf das Führungs- und/oder Antriebselement wenigstens eine Borstenreihe (11) aufweist, welche zumindest teilweise an die Zuleitungsbahn (10) aus dem filz- und/oder oder vliesartigen Material angrenzt.

2. Vorrichtung nach. Anspruch 1, **dadurch gekennzeichnet, daß** das Bürstenelement (4) zwei oder mehr Borstenreihen (11, 12) aufweist, wobei sich die Zuleitungsbahn (10) bis zwischen die einzelnen Borstenreihen (11, 12) erstreckt.

3. Vorrichtung nach einem der vorstehenden Ansprüche, **dadurch gekennzeichnet, daß** die Borstenreihen (11, 12) in einer Halterung (21) angeordnet sind.

4. Vorrichtung nach einem der vorstehenden Ansprüche, **dadurch gekennzeichnet, daß** die Borstenreihen (11, 12) derart zueinander geneigt in der Halterung (21) angeordnet sind, daß sie schlüssig an der Zuleitungsbahn (10) anliegen.

5. Vorrichtung nach einem der vorstehenden Ansprüche, **dadurch gekennzeichnet, daß** die Halterung (21) als U-Profilschiene ausgebildet ist, und daß die Borstenreihen (11, 12) in zwei in der Halterung ausgesparten Nutenreihen (22, 23) angeordnet sind.

6. Vorrichtung nach einem der vorstehenden Ansprüche, **dadurch gekennzeichnet, daß** die Halterung (21) einen integrierten oder als separates Bauteil ausgebildeten Rohransatz (21') mit Kapillarwirkung aufweist, durch welchen der Schmierstoff zur Zuleitungsbahn (10) führbar ist.

7. Vorrichtung nach einem der vorstehenden Ansprüche, **gekennzeichnet durch** eine an das Bürstenelement (4) anschließbare Einrichtung (3) zur Zuleitung des Schmierstoffes zum Bürstenelement (4), **durch** welche die Zuleitungsbahn (10) verläuft.

8. Vorrichtung nach einem der vorstehenden Ansprüche, **dadurch gekennzeichnet, daß** die Zuleitungseinrichtung (3) als Kunststoff- oder Metallgehäuse ausgebildet ist, das wenigstens einen insbesondere flächigen Hohlraum (9) zum Einbringen der Zuleitungsbahn (10) aufweist.

9. Vorrichtung nach einem der vorstehenden Ansprüche, **dadurch gekennzeichnet, daß** die Zuleitungseinrichtung (3) derart ausgebildet ist, daß ihr Gehäuse das zu schmierende Element (S) mehrseitig umfaßt, wobei zwei oder mehr Seiten des zu schmierenden Elementes jeweils eines der Bürstenelemente (4a, 4b, 4c) zugeordnet ist und wobei sich die Zuleitungsbahn (10) in Einzelbahnen zur Zuleitung von Schmierstoff zu jedem der Bürstenelemente (4) unterteilt.

10. Vorrichtung nach einem der vorstehenden Ansprüche, **dadurch gekennzeichnet, daß** an das Gehäuse der Zuleitungseinrichtung (3) der automatische Schmierstoffgeber (2) angeschliessbar ist.

11. Vorrichtung nach einem der vorstehenden Ansprüche, **dadurch gekennzeichnet, daß** sie derart an einem Hebewerk oder an einer anderen Maschine anbringbar ist, daß sie die ortsfesten Laufschienen (S) oder Führungen des Hebewerkes oder der Maschine umfaßt und diese bei Relativbewegungen zwischen der Vorrichtung und dem Hebewerk/ der Maschine schmiert und/oder reinigt.

12. Vorrichtung nach einem der vorstehenden Ansprüche, **dadurch gekennzeichnet, daß** zwischen der Zuleitungseinrichtung (3) und dem Schmierstoffgeber (2) eine Einrichtung zur Auslaufsicherung angeordnet ist.

13. Vorrichtung nach einem der vorstehenden Ansprüche, **dadurch gekennzeichnet, daß** zwischen der Zuleitungsbahn (10) und dem Schmierstoffgeber (2) ein Verschlußstopfen mit integrierter Rückflußsicherung angeordnet ist.

14. Vorrichtung nach einem der vorstehenden Ansprüche, **dadurch gekennzeichnet, daß** der Schmierstoffgeber (2) einen automatischen, elektrochemischen Gasdruckantrieb aufweist.

15. Vorrichtung nach einem der vorstehenden Ansprüche, **dadurch gekennzeichnet, daß** die Zuleitungseinrichtung (3) eine Zuleitung (24) mit Kapillarwirkung aufweist.

16. Vorrichtung nach einem der vorstehenden Ansprüche, **dadurch gekennzeichnet, daß** der Schmierstoffgeber mit einem Stopfen versehen ist, welcher eine Bohrung aufweist, die am Ende mit einer - vor Inbetriebnahme des Schmierstoffgebers abzuschneidenden - Kappe dicht verschlossen ist.

17. Vorrichtung nach einem der vorstehenden Ansprüche, **dadurch gekennzeichnet, daß** das Bürstenelement (4) als Rundbürste mit kreisförmiger Borstenreihe und innenliegenden Filzstopfen ausgebildet ist.

## Claims

1. Brush arrangement for lubricating and cleaning guide and/or drive elements, in particular for lubricating and cleaning chains, rails or ropes, having a brush element (4) and a feed web (10), for the lubricant, made of a felt- or fleece-like material, **characterized in that** the brush element, for applying the lubricant to the guide and/or drive element, has at least one bristle row (11) which at least partly adjoins the feed web (10) made of felt- and/or fleece-like material.

2. Arrangement according to Claim 1, **characterized in that** the brush element (4) has two or more bristle rows (11, 12), the feed web (10) extending up between the individual bristle rows (11, 12).

3. Arrangement according to either of the preceding claims, **characterized in that** the bristle rows (11, 12) are arranged in a holder (21).

4. Arrangement according to one of the preceding claims, **characterized in that** the bristle rows (11, 12) are arranged in the holder (21) so as to be inclined towards one another in such a way that they bear cohesively against the feed web (10).

5. Arrangement according to one of the preceding claims, **characterized in that** the holder (21) is designed as a U-profile rail, and **in that** the bristle rows (11, 12) are arranged in two groove rows (22, 23) recessed in the holder.

6. Arrangement according to one of the preceding claims, **characterized in that** the holder (21) has an integrated tube socket (21'), or a tube socket (21') designed as a separate component, which has a capillary action and through which the lubricant can be directed to the feed web (10).

7. Arrangement according to one of the preceding claims, **characterized by** a device (3) which can be attached to the brush element (4) and is intended for feeding the lubricant to the brush element. (4) and through which the feed web (10) passes.

8. Arrangement according to one of the preceding claims, **characterized in that** the feed device (3) is designed as a plastic or metal housing which has at least one, in particular planar, cavity (9) for introducing the feed web (10).

9. Arrangement according to one of the preceding claims, **characterized in that** the feed device (3) is designed in such a way that its housing encloses the element (S) to be lubricated on several sides, in each case one of the brush elements (4a, 4b, 4c) being assigned to two or more sides of the element to be lubricated, and the feed web (10) being subdivided into individual webs for feeding lubricant to each of the brush elements (4).

10. Arrangement according to one of the preceding claims, **characterized in that** the automatic lubricant dispenser (2) can be connected to the housing of the feed device (3).

11. Arrangement according to one of the preceding claims, **characterized in that** it can be attached to a lifting mechanism or another machine in such a way that it encloses the fixed running rails (S) or guides of the lifting mechanism or of the machine and lubricates and/or cleans these running rails (S) or guides during relative movements between the arrangement and the lifting mechanism or the machine.

12. Arrangement according to one of the preceding claims, **characterized in that** a device for leakage protection is arranged between the feed device (3) and the lubricant dispenser (2).

13. Arrangement according to one of the preceding claims, **characterized in that** a stopper with integrated backflow protection is arranged between the feed web (10) and the lubricant dispenser (2).

14. Arrangement according to one of the preceding claims, **characterized in that** the lubricant dispenser (2) has an automatic, electrochemical gas-pressure drive.

15. Arrangement according to one of the preceding claims, **characterized in that** the feed device (3) has a feed line (24) with a capillary action.

16. Arrangement according to one of the preceding claims, **characterized in that** the lubricant dispenser is provided with a stopper which has a bore which is tightly closed at the end with a cap, to be cut off before putting the lubricant dispenser into operation.

17. Arrangement according to one of the preceding claims, **characterized in that** the brush element (4) is designed as a round brush with a circular bristle row and internal felt plug.

## Revendications

1. Dispositif à brosse pour graisser et nettoyer des éléments de guidage et/ou d'entraînement, en particulier pour graisser et nettoyer des chaînes, des rails ou des câbles, comportant un élément formant brosse (4) et une voie d'arrivée (10) pour le lubrifiant en une matière de type feutre ou non-tissé, **caractérisé en ce que** l'élément formant brosse comporte, pour appliquer le lubrifiant sur l'élément de guidage et/ou d'entralnement, au moins une rangée de poils (11) qui est adjacente au moins en partie à la voie d'amenée (10) en matière de type feutre et/ou de type non-tissé.

2. Dispositif selon la revendication 1, **caractérisé en ce que** l'élément formant brosse (4) comporte deux ou plusieurs rangées de poils (11, 12), la voie d'amenée (10) s'étendant jusqu'entre les différentes rangées de poils (11, 12).

3. Dispositif selon l'une des revendications précédentes, **caractérisé en ce que** les rangées de poils (11, 12) sont disposées dans un support (21).

4. Dispositif selon l'une des revendications précédentes, **caractérisé en ce que** les rangées de poils (11, 12) sont inclinées l'une par rapport à l'autre dans le support (21), de manière à s'appliquer tout contre la voie d'amenée (10).

5. Dispositif selon l'une des revendications précédentes, **caractérisé en ce que** le support (21) est réalisé sous la forme d'un rail profilé en U et **en ce que** les rangées de poils (11, 12) sont disposées dans deux rangées de rainures (22, 23) ménagées dans le support.

6. Dispositif selon l'une des revendications précédentes, **caractérisé en ce que** le support (21) comporte un appendice tubulaire (21') à action capillaire, intégré ou réalisé en tant que composant séparé, par lequel le lubrifiant peut être conduit vers la voie d'amenée (10).

7. Dispositif selon l'une des revendications précédentes, **caractérisé par** un dispositif (3), qui peut être raccordé à l'élément formant brosse (4), destiné à acheminer le lubrifiant vers l'élément formant brosse (4) et à travers lequel s'étend la voie d'amenée (10).

8. Dispositif selon l'une des revendications précédentes, **caractérisé en ce que** le dispositif d'amenée (9) est réalisé sous la forme d'un boîtier en matière plastique ou en métal qui comporte au moins une cavité (9), en particulier plate, pour l'aménagement de la voie d'amenée (10).

9. Dispositif selon l'une des revendications précédentes, **caractérisé en ce que** le dispositif d'amenée (3) est conformé de manière que son boîtier entoure sur plusieurs côtés l'élément à graisser (S), à deux ou plusieurs côtés de l'élément à graisser étant associé l'un des éléments formant brosse (4a, 4b, 4c) et la voie d'amenée (10) étant divisée en voies individuelles pour amener le lubrifiant vers chacun des éléments formant brosse (4).

10. Dispositif selon l'une des revendications précédentes, **caractérisé en ce qu'**au boîtier du dispositif d'amenée (3) peut être raccordé le distributeur automatique de lubrifiant (2).

11. Dispositif selon l'une des revendications précédentes, **caractérisé en ce qu'**il peut être monté sur un élévateur ou une autre machine, **en ce qu'**il comprend les rails de roulement fixes (S) ou les guides de l'élévateur ou de la machine et **en ce qu'**il graisse et/ou nettoie ceux-ci pendant des mouvements relatifs entre le dispositif et l'élévateur/la machine.

12. Dispositif selon l'une des revendications précédentes, **caractérisé en ce qu'**une protection contre une fuite est disposée entre le dispositif d'amenée (3) et le distributeur de lubrifiant (2).

13. Dispositif selon l'une des revendications précédentes, **caractérisé en ce qu'**un bouchon de fermeture avec protection intégrée contre un reflux est disposé entre la voie d'amenée (10) et le distributeur de lubrifiant (2).

14. Dispositif selon l'une des revendications précédentes, **caractérisé en ce que** le distributeur de lubrifiant (2) comporte un entrainement à pression de gaz automatique et électrochimique.

15. Dispositif selon l'une des revendications précédentes, **caractérisé en ce que** le dispositif d'amenée (3) comporte une conduite d'arrivée (24) avec action capillaire.

16. Dispositif selon l'une des revendications précédentes, **caractérisé en ce que** le distributeur de lubrifiant est pourvu d'un bouchon qui présente un trou, lequel est fermé de manière étanche, à son extrémité, par un capuchon qui doit être coupé avant la mise en service du distributeur de lubrifiant.

17. Dispositif selon l'une des revendications précédentes, **caractérisé en ce que** l'élément formant brosse (4) est conformé en brosse ronde avec une rangée de poils circulaire et un bouchon de feutre situé à l'intérieur.
